# EUROPÄISCHE PATENTSCHRIFT

(11) **EP 0 644 989 B1**
(45) Veröffentlichungstag und Bekanntmachung des Hinweises auf die Patenterteilung: **17.12.1997**
(21) Anmeldenummer: 94912445.7
(22) Anmeldetag: 13.04.1994
(51) Int. Cl.: F16H 61/38, F16H 61/02, B60K 41/14

(54) **VERFAHREN ZUR ÜBERSETZUNGSEINSTELLUNG EINES STUFENLOS ARBEITENDEN GETRIEBES**
GEAR TRANSMISSION RATIO REGULATION PROCESS IN A CONTINUOUSLY VARIABLE TRANSMISSION
PROCEDE DE REGULATION DU RAPPORT D'UNE TRANSMISSION A REGLAGE CONTINU

(30) Priorität: 16.04.1993 DE 4312415
(43) Veröffentlichungstag der Anmeldung: 29.03.1995
(73) Patentinhaber: ROBERT BOSCH GMBH, 70442 Stuttgart (DE)
(72) Erfinder: SENGER, Karl-Heinz, D-74369 Löchgau (DE); KEUPER, Gerhard, D-71229 Leonberg (DE); BÄUERLE, Peter, D-71636 Ludwigsburg (DE)
(86) Internationale Anmeldenummer: DE9400401
(87) Internationale Veröffentlichungsnummer: WO9424465

(56) Entgegenhaltungen:
- EP-A- 0 369 446
- EP-A- 0 406 615
- EP-A- 0 602 672
- WO-A-93/00532
- US-A- 5 152 192
- VDI ZEITSCHRIFT - SPEZIAL NR. "ANTRIEBSTECHNIK" Nr. 134, März 1992, DÜSSELDORF DE, Seiten 26 - 49 EGGERT, U 'CVT-Getriebe: Elektronische Regelung und Fahrdynamik'
- VDI ZEITSCHRIFT - SPEZIAL NR. "ANTRIEBSTECHNIK" Nr. 2, März 1989, DÜSSELDORF DE, Seiten 18 - 25 EGGERT, U 'Stufenlose Getriebe und Elektronische Regelung bei Kraftfahrzeugen'

## Beschreibung

### Stand der Technik

Die Erfindung betrifft ein Verfahren gemäß dem Oberbegriff von Anspruch 1.

Am Markt befinden sich Getriebe mit kontinuierlicher Übersetzungsverstellung, die unter Verwendung hydraulischer Steuerungen arbeiten. Derartige Steuerungen sind sehr aufwendig.

Ferner sind elektronisch gesteuerte kontinuierlich verstellbare Getriebe bekannt, bei denen nach Fahrerwunsch oder automatisch auf unterschiedlichen Kennlinien eines Motorkennfelds des Motors eines Fahrzeugs gefahren werden kann. Bekannt ist es, diesen Betrieb auf der Kennlinie optimalen Verbrauchs (Wirkungsgrads) oder auf der Kennlinie optimaler Leistung vorzunehmen. Von diesen jeweiligen Kennlinien des Motorkennfelds sind Schaltkennlinien von Schaltkennfeldern abgeleitet, die den bekannten Economy- beziehungsweise Sport-Betrieb des Getriebes zulassen. Nachteilig ist, daß im Economy-Mode ein relativ schlechtes Beschleunigungsverhalten bezogen auf eine bestimmte Drosselklappenänderung des Motors vorliegt und daß im Sport-Mode bei einer Fahrt mit konstanter Geschwindigkeit ein hohes und somit unökonomisches Drehzahlniveau vorgegeben ist.

Ein gattungsgemäßes Verfahren ist aus Antriebstechnik, März 1992, S.26-49, bekannt.

### Vorteile der Erfindung

Das erfindungsgemäße Verfahren mit den im Hauptanspruch genannten Merkmalen hat demgegenüber den Vorteil, daß eine dynamische Einstellung der Übersetzung des kontinuierlich verstellbaren Getriebes erfolgt, so daß insbesondere ein günstiges, niedriges Drehzahlniveau im Economy-Mode mit gutem Beschleunigungsvermögen kombiniert wird. Für die Ableitung des Schaltkennfelds der dynamischen Steuerung werden erfindungsgemäß spezielle Kennlinien im Motorkennfeld derart ausgewählt, daß man -ausgehend von der Kennlinie optimierten oder optimalen Verbrauchs bei einer Fahrt mit konstanter Geschwindigkeit- durch eine Änderung der Leistungsanforderung einen sich entsprechend der Änderungsgeschwindigkeit der Leistungsanforderung ergebenden Leistungsüberschuß und damit verbesserte Beschleunigungswerte erhält. Der Übergang von einem Betriebspunkt mit optimiertem Verbrauch zu einem Betriebspunkt optimierter beziehungsweise gewünschter Leistung erfolgt nicht sprunghaft, sondern kontinuierlich. Sprünge im Kennfeld werden also vermieden. Zur Realisierung eines Beschleunigungswunsches des Fahrers des Fahrzeugs wird die relevante Kennlinie in Richtung auf die leistungsoptimierte Kennlinie entsprechend weit verschoben. Liegt der Wunsch einer geringeren Beschleunigung vor, so wird die Kennlinie in Richtung der verbrauchsoptimierten Kennlinie bewegt. Aus diesen Vorgaben resultiert das erfindungsgemäße Schaltkennfeld. Dort können also Betriebspunkte angenommen werden, die auf einer zwischen der Kennlinie des optimierten Verbrauchs und der Kennlinie der optimierten Leistung verlaufenden, dynamischen Kennlinie des Motorkennfelds liegen, wobei -wie erwähnt- die Lage der dynamischen Kennlinie von der Größe der Änderungsgeschwindigkeit der Leistungsanforderung abhängt.

Nach einer Weiterbildung der Erfindung ist vorgesehen, daß die Leistungsanforderung der Stellung der Drosselklappe des Motors und somit die Änderungsgeschwindigkeit der Leistungsanforderung der Änderungsgeschwindigkeit der Drosselklappe entspricht.

Das erfindungsgemäße Schaltkennfeld entspricht im Hinblick auf seine Begrenzungslinien zum einen dem Schaltkennfeld des Economy-Modes und zum anderen dem Schaltkennfeld des Sport-Modes. Dies führt dazu, daß eine Begrenzungslinie des Schaltkennfeldes einer einem optimierten Verbrauch zugeordneten Kennlinie entspricht und daß eine weitere Begrenzungslinie des Schaltkennfeldes einer optimierten Leistung zugeordneten Kennlinie entspricht.

### Zeichnung

Die Erfindung wird im folgenden anhand der Figuren näher erläutert.

Es zeigen:
- Figur 1: ein Motorkennfeld mit einer Kennlinie optimierten Verbrauchs (Wirkungsgrads);
- Figur 2: ein aus dem Motorkennfeld der Figur 1 abgeleitetes Schaltkennfeld;
- Figur 3: ein Motorkennfeld für optimierte Leistung;
- Figur 4: ein aus dem Motorkennfeld der Figur 3 abgeleitetes Schaltkennfeld;
- Figur 5: ein Motorkennfeld gemäß dem dynamischen Verfahren der Erfindung;
- Figur 6: ein Schaltkennfeld der dynamischen Steuerung, hergeleitet aus dem Motorkennfeld der Figur 5,
- Figur 7: ein Blockschaltbild und
- Figur 8: ein Struktogramm.

### Beschreibung eines Ausführungsbeispiels

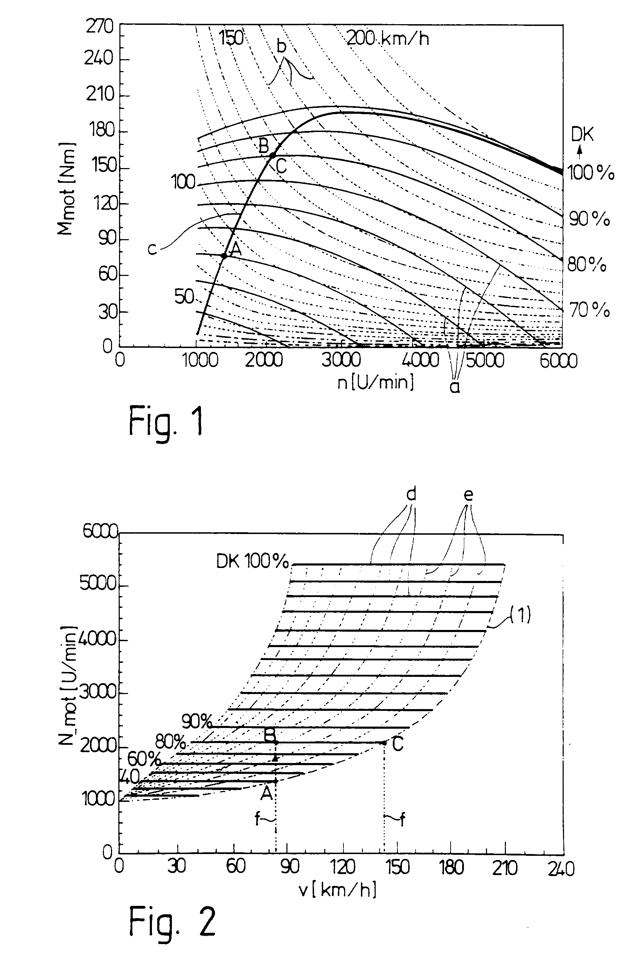

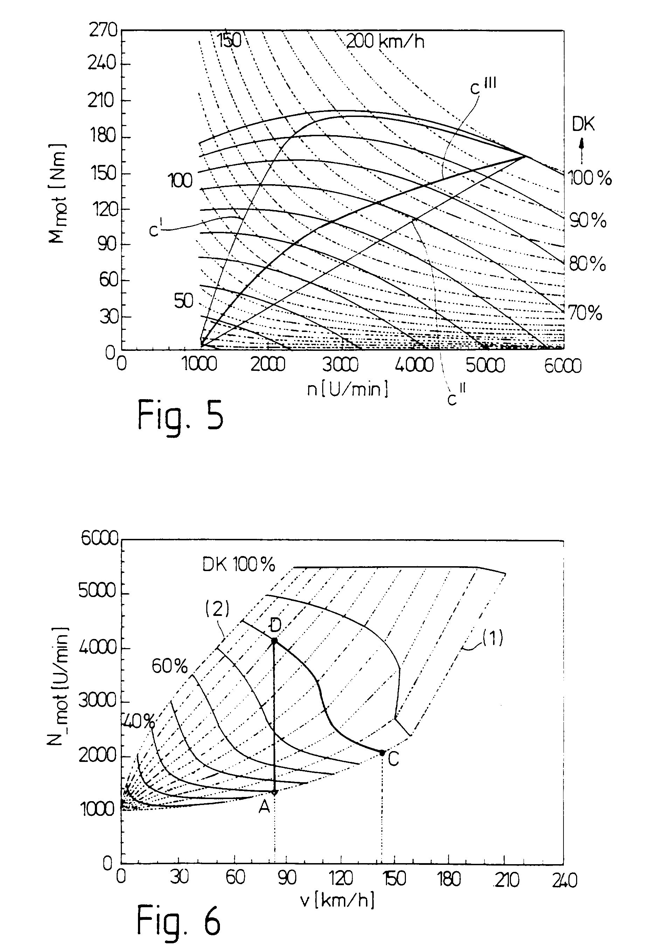

Die Kennlinien der Figuren 1 bis 4 zeigen den Ausgangspunkt für das erfindungsgemäße Verfahren zur Vorgabe der aktuellen Übersetzung eines kontinuierlich verstellbaren Getriebes (CVT) eines Fahrzeugs. An ihnen soll zunächst ein Economy-Mode und auch ein Sport-Mode verdeutlicht werden, so wie er bereits im Stand der Technik bekannt ist. Anhand des Bekannten wird dann die Erfindung besonders anschaulich. Sie wird in den Figuren 5 und 6 verdeutlicht.

Die Figur 1 zeigt ein Motorkennfeld. Dargestellt sind Kennlinien a, die das Motormoment Mₘₒₜ in Abhängigkeit vom Drosselklappenwinkel DK zeigen. Ferner sind Leistungshyperbeln b eingetragen, wie sie sich bei unbeschleunigter Geradeausfahrt in der Ebene einstellen. Mit c ist eine Kennlinie optimierten Verbrauchs, also optimierten Wirkungsgrads eingetragen. Demnach zeigt die Figur 1 ein Motorkennfeld optimierten Verbrauchs.

Aus dem Motorkennfeld optimierten Verbrauchs ist das Schaltkennfeld der Figur 2 abgeleitet. Die horizontalen Linien d sind Linien gleichen Drosselklappenwinkels. Die ansteigenden Linien e sind Linien gleicher Längsbeschleunigung des Fahrzeugs. Auf der Abszisse des Diagramms der Figur 2 ist die Fahrgeschwindigkeit v des Fahrzeugs in km/h angegeben, so daß die beiden gestrichelten Linien f jeweils eine bestimmte Fahrgeschwindigkeit darstellen.

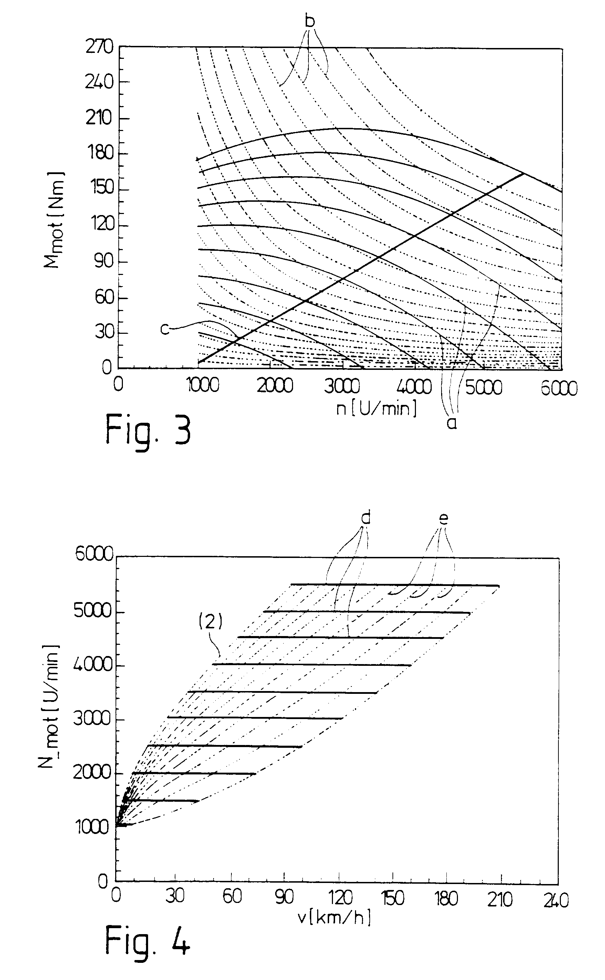

Das Motorkennfeld der Figur 3 entspricht der Darstellung der Figur 1, wobei jedoch nicht ein Kennfeld optimierten Verbrauchs, sondern optimierter Leistung vorliegt. Dementsprechend ergibt sich gegenüber der Darstellung der Figur 1 ein anderer Verlauf der Kennlinie c. Aus dem Motorkennfeld optimierter Leistung der Figur 3 ist das Schaltkennfeld der Figur 4 abgeleitet. Bei der Figur 4 handelt es sich somit um ein Schaltkennfeld optimierter Leistung.

Das Schaltkennfeld der Figur 2 ist also ein Schaltkennfeld im Economy-Mode, während das Schaltkennfeld der Figur 4 eine Schaltkennfeld im Sport-Mode ist.

Aus dem Vorstehenden wird deutlich, daß bei der Herleitung der Schaltkennfelder des Economy-Modes beziehungsweise Sport-Modes jeweils vorausgesetzt wurde, daß -unabhängig vom Fahrzustand- nur Betriebspunkte auf der verbrauchsoptimierten beziehungsweise der leistungsoptimierten Kennlinie erreicht werden können. Die Erfindung geht nicht diesen Weg. Bei ihr können auch Betriebspunkte die verbrauchsoptimiert oder aber leistungsoptimiert sind angefahren werden, zusätzlich jedoch auch weitere Betriebspunkte, die sich zwischen diesen beiden Zuständen befinden.

Zur Verdeutlichung wird auf die Figur 5 eingegangen. Diese zeigt ein Diagramm, das der Figur 1 beziehungsweise der Figur 3 entspricht. Neben der Kennlinie optimierten Verbrauchs (in Figur 5 als c' bezeichnet) ist dort auch die Kennlinie optimierter Leistung dargestellt (sie ist mit c'bezeichnet). Die Kennlinien c' und c' entsprechen also den Kennlinien der Figuren 1 beziehungsweise 3. Der Figur 5 ist entnehmbar, daß sich zwischen der Kennlinie c' des optimierten Verbrauchs und der Kennlinie c" der optimierten Leistung eine weitere Kennlinie c''' befindet. Es handelt sich hierbei um eine dynamische Kennlinie des Motorkennfelds, die zwischen der Kennlinie c' und c" ihre Lage in Abhängigkeit eines dynamischen Betriebsparameters einstellt. Bei diesem Betriebsparameter handelt es sich um eine Änderung der Leistungsanforderung an den Motor, vorzugsweise eine Änderungsgeschwindigkeit der Leistungsanforderung, insbesondere eine Änderungsgeschwindigkeit der Drosselklappe des Motors. Ausgehend von der sich aufgrund der Änderungsgeschwindigkeit der Leistungsanforderung einstellenden Kennlinie c''' des Motorkennfelds wird -gemäß Figur 6- ein zugehöriges Schaltkennfeld ausgebildet. Das Auswahlkriterium des Schaltkennfelds ist somit die Änderungsgeschwindigkeit der Drosselklappe des Motors. Insbesondere kann vorgesehen sein, daß bei langsamen Änderungen der Drosselklappe der Economy-Mode aktiv bleibt. Dies entspricht dem Diagramm der Figur 2. Bei schnellen Änderungen der Stellung der Drosselklappe wird das Kennfeld der dynamischen Steuerung gemäß Figur 6 herangezogen. Bei mittleren Änderungsgeschwindigkeiten sind beliebig viele Zwischenstufen zwischen der Darstellung der Figur 2 und der Figur 6 möglich. Wieweit sich der Betriebspunkt jeweils von der Kennlinie optimierten Wirkungsgrades (optimierten Verbrauchs) entfernt, wird also von der Änderungsgeschwindigkeit der Drosselklappe abhängig gemacht. Mit der erfindungsgemäßen Steuerung kann man somit auf einen separaten Sport-Mode verzichten.

Der erfinderische Gedanke ist selbstverständlich nicht auf die beiden Extreme (Kennlinie optimierten Verbrauchs und optimierter Leistung) beschränkt. Selbstverständlich ist es auch möglich, für die dynamische erfindungsgemäße Steuerung andere stationäre Motorkennlinien als Ausgangskennlinien heranzuziehen oder mit heranzuziehen.

Zusätzlich kann die erfindungsgemäße Steuerung derart erweitert werden, daß bei hohen Änderungsgeschwindigkeiten der Drosselklappe zunächst eine stationäre Kennlinie optimierter Leistung gemäß dem Schaltkennfeld der Figur 4 eingestellt wird und daß dann, nach einer geeigneten Zeitspanne oder nach überschreiten eines bestimmten Anteils (zum Beispiel 80%) der stationären Endgeschwindigkeit beziehungsweise Unterschreiten einer verbleibenden Beschleunigung, der langsame Übergang auf die verbrauchsoptimierte Kennlinie erfolgt. Für ein sportliches Fahren sind damit alle Voraussetzungen gegeben.

Anhand eines Beispiels sei die Erfindung näher beschrieben. In der Figur 2 ist ein Betriebspunkt A eingezeichnet. Er entspricht einer Drosselklappenstellung von 40% sowie einer Geschwindigkeit v von 85 km/h. Es sei angenommen, daß der Fahrer des Fahrzeugs ein Beschleunigungsmanöver durchführt. Er öffnet die Drosselklappe auf die Stellung 80%. Hierdurch verändert die Getriebesteuerung die Übersetzung des kontinuierlich verstellbaren Getriebes derart, daß sich eine Motordrehzahl von circa 2050 U/min einstellt. Damit ist ein Übergang vom Betriebspunkt A zum Betriebspunkt B erfolgt. Mit dieser konstanten Drehzahl beschleunigt nunmehr das Fahrzeug bis auf eine Endgeschwindigkeit von circa 143 km/h (Betriebspunkt C). Die genannten Betriebspunkte A,B und C sind ebenfalls in der Figur 1 eingetragen. Sie liegen auf der verbrauchsoptimierten Kennlinie, wobei die im Betriebspunkt B zur Verfügung stehende Leistung größer ist als die für die Konstantfahrt mit der Startgeschwindigkeit (Betriebspunkt A) bereitgestellte Leistung. Der Überschuß wird für die Beschleunigung verwendet, bis sich bei circa 143 km/h ein neuer Gleichgewichtszustand einstellt.

Demgegenüber sei nunmehr anhand der Figur 6 die erfindungsgemäße dynamische Steuerung mit denselben Ausgangswerten erläutert. Begonnen wird im Betriebspunkt A, bei dem eine Startgeschwindigkeit von etwa 85 km/h vorliegt. Infolge der Drosselklappenänderung auf 80% wird eine Motordrehzahl von circa 4.800 U/min eingestellt (Betriebspunkt D). Bei dieser nunmehr beibehaltenden Drosselklappenstellung wird mit einer deutlich größeren Beschleunigung gegenüber dem Vorgang gemäß Figur 2 der (identische) Betriebspunkt C angefahren. Im zum Schaltkennfeld der Figur 6 dazugehörigen Motorkennfeld der Figur 5 ist erkennbar, daß sich infolge der dynamischen Steuerung der entsprechende Betriebspunkt weit von der verbrauchsoptimierten Kennlinie c" in Richtung der Kennlinie c' optimierter Leistung verschiebt. Ist der Beschleunigungsvorgang abgeschlossen, so wird erfindungsgemäß wieder ein stationärer Zustand erreicht, bei dem verbrauchsoptimal gefahren wird.

Aus dem Vorstehenden ergibt sich, daß wegen der Möglichkeit, je nach Anforderung eine entsprechende Kennlinie aus dem Motorkennfeld der Figur 5 auszuwählen, aufgrund der beiden Grenzkennlinien (optimierter Verbrauch sowie optimierte Leistung) einerseits die mit 1 gekennzeichnete Linie in der Figur 2 identisch mit der ebenfalls mit 1 gekennzeichneten Linie in der Figur 6 ist und andererseits auch Identität zwischen denen mit 2 gekennzeichneten Kennlinien in den Figuren 4 und 6 besteht.

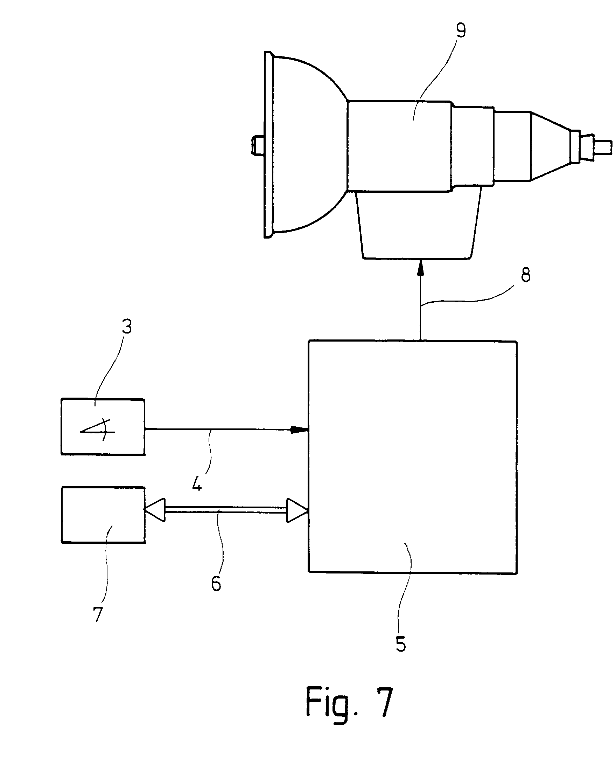

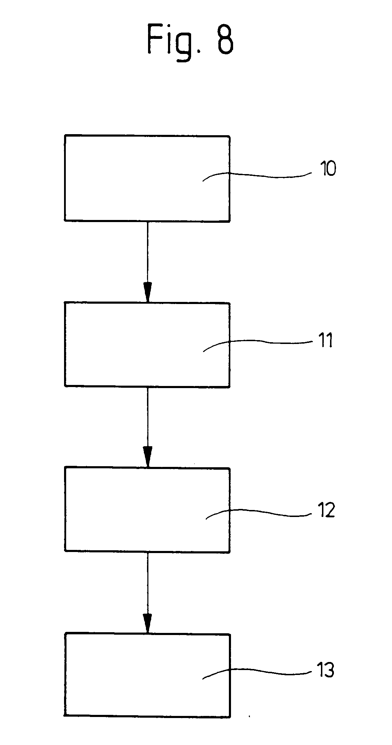

Anhand des Blockschaltbilds der Figur 7 und des Struktogramms der Figur 8 wird das am meisten bevorzugte Ausführungsbeispiel der Erfindung verdeutlicht. Die Figur 7 zeigt einen Sensor 3, der die Änderungsgeschwindigkeit der Drosselklappe des Motors eines Fahrzeugs erfaßt und über eine elektrische Verbindung 4 einer Getriebesteuerung 5 zuführt. Die Getriebesteuerung 5 steht über einen Datenbus 6 im Datenaustausch mit der Motorsteuerung 7/dem Motor des Fahrzeugs. Über eine Verbindung 8 ist der Ausgang der Getriebesteuerung mit einem kontinuierlich verstellbaren Getriebe 9 verbunden, wodurch das jeweils aktuelle übersetzungsverhältnis eingestellt wird. Im Ausgangszustand 10 der Figur 8 sei angenommen, daß eine stationäre Geradeausfahrt des Fahrzeugs vorliegt, so daß der Betriebspunkt auf der Linie optimalen Verbrauchs liegt. Im Verfahrensschritt 11 wird der Drosselklappenwinkel verändert; es soll ein Beschleunigungsvorgang erfolgen. Je nach dem, wie groß die Änderungsgeschwindigkeit dieser Leistungsanforderung ist, erfolgt zur Erzielung eines möglichst hohen Beschleunigungswertes zunächst der Betrieb auf der Kennlinie optimaler Leistung. Um Sprünge im Kennfeld zu vermeiden, wird -in Schritt 12- dann -analog zu einem geringeren Beschleunigungswunsch- das Verschieben der Kennlinie in Richtung der verbrauchsoptimalen Linie vorgenommen. Ist die der aktuellen Drosselklappenstellung entsprechende Maximalgeschwindigkeit angenommen, so wird der Betrieb gemäß Schritt 13 wieder auf der Kennlinie optimalen Wirkungsgrades durchgeführt.

Erfindungsgemäß wird also in den Kennlinienfeldern ein kontinuierlicher Übergang herbeigeführt; es erfolgt kein Sprung, so wie es im Stand der Technik vorgesehen ist. Kennzeichnend für das erfindungsgemäße Kennfeld ist, daß beim Gasgeben zunächst eine höhere Motordrehzahl gegenüber einer Betriebsweise im Economy-Mode eingestellt wird. Mit zunehmender Geschwindigkeit des Fahrzeugs wird dann die Motordrehzahl derart reduziert, daß der Motor bei der aus der aktuellen Drosselklappenstellung resultierenden Maximalgeschwindigkeit wieder auf einer Kennlinie optimierten Verbrauchs (Wirkungsgrads) betrieben wird.

## Patentansprüche

1. Verfahren zur Vorgabe der aktuellen übersetzung eines kontinuierlich verstellbaren Getriebes eines Fahrzeugs, insbesondere Personenkraftwagens, bei dem Betriebspunkte eines Schaltkennfelds angenommen werden können, die auf einer Kennlinie optimierten Verbrauchs eines Motorkennfelds eines Motors des Fahrzeugs liegen, und bei dem auch Betriebspunkte des Schaltkennfelds angenommen werden können, die auf einer Kennlinie optimierter Leistung des Motorkennfelds liegen, wobei der Verlauf der Kennlinien des Schaltkennfelds aus der jeweils gewählten Kennlinie des Motorkennfelds resultiert, **dadurch gekennzeichnet,** daß Betriebspunkte des Schaltkennfelds angenommen werden können, die auf einer zwischen der Kennlinie (c') des optimierten Verbrauchs und der Kennlinie (c") der optimierten Leistung verlaufenden, dynamischen Kennlinie (c''') des Motorkennfelds liegen, wobei die Lage der dynamischen Kennlinie (c''') von der Größe der Änderungsgeschwindigkeit der Leistungsanforderung abhängt.

2. Verfahren nach Anspruch 1, **dadurch gekennzeichnet,** daß die Leistungsanforderung der Stellung der Drosselklappe des Motors und somit die Änderungsgeschwindigkeit der Leistungsanforderung der Änderungsgeschwindigkeit der Drosselklappe entspricht.

3. Verfahren nach einem der vorhergehenden Ansprüche, **dadurch gekennzeichnet**, daß eine Begrenzungslinie des Schaltkennfelds einer einem optimierten Verbrauch zugeordneten Kennlinie entspricht.

4. Verfahren nach einem der vorhergehenden Ansprüche, **dadurch gekennzeichnet**, daß eine weitere Begrenzungslinie des Schaltfelds einer einer optimierten Leistung zugeordneten Kennlinie entspricht.

## Claims

1. Method for specifying the actual transmission ratio of a continuously variable transmission (CVT) of a vehicle, especially a passenger car, in which it is possible for operating points of a change characteristic map which are located on an optimized-consumption characteristic of an engine characteristic map of an engine of the vehicle to be assumed and in which it is also possible for operating points of the change characteristic map which are located on an optimized-power characteristic of the engine characteristic map to be assumed, the shape of the characteristics of the change characteristic map resulting from the respectively selected characteristic of the engine characteristic map, characterized in that it is possible for operating points of the change characteristic map to be assumed which are located on a dynamic characteristic (c''') of the engine characteristic map which runs between the optimized-consumption characteristic (c') and the optimized-power characteristic (c"), the position of the dynamic characteristic (c''') depending on the magnitude of the rate of change of the power demand.

2. Method according to Claim 1, characterized in that the power demand corresponds to the position of the throttle valve of the engine and hence the rate of change of the power demand corresponds to the rate of change of the throttle valve.

3. Method according to one of the preceding claims, characterized in that a boundary line of the change characteristic map corresponds to a characteristic associated with an optimized consumption.

4. Method according to one of the preceding claims, characterized in that a further boundary line of the change map corresponds to a characteristic associated with an optimized power.

## Revendications

1. Procédé pour prédéterminer le rapport actuel d'une transmission réglable en continu d'un véhicule, notamment d'un véhicule de tourisme, selon lequel
• on prend des points de fonctionnement d'un champ de caractéristiques de changement de vitesse sur une caractéristique correspondant à une consommation optimisée d'une caractéristique du moteur du véhicule, et
• on prend également les points de fonctionnement du champ de caractéristiques de changement de vitesse sur une caractéristique de puissance optimisée du champ de caractéristiques du moteur,
• le tracé des caractéristiques du champ de changement de vitesse résultant de la caractéristique chaque fois choisie du champ de caractéristiques du moteur,
caractérisé en ce qu'
• on prend comme points de fonctionnement du champ de caractéristiques de changement de vitesse, les points de fonctionnement situés sur la caractéristique dynamique (c''') du champ de caractéristiques du moteur passant entre la caractéristique (c') de la consommation optimisée et la caractéristique (c") de la puissance optimisée,
• la position de la caractéristique dynamique (c''') dépendant de l'amplitude de la variation de vitesse de la demande de puissance.

2. Procédé selon la revendication 1,
caractérisé en ce que
la demande de puissance correspond à la position du volet d'étranglement du moteur et ainsi à la vitesse de variation de la demande de puissance de la vitesse de variation du volet d'étranglement.

3. Procédé selon l'une des revendications précédentes,
caractérisé en ce qu'
une courbe de limitation du champ de caractéristiques correspond à une caractéristique associée à une consommation optimisée.

4. Procédé selon l'une des revendications précédentes,
caractérisé en ce qu'
une autre courbe de référence du champ de changement de vitesse correspond à une caractéristique associée à une puissance optimisée.
